(19) Europäisches Patentamt
European Patent Office
Office européen des brevets

(11) **EP 1 274 598 B1**

(12) **EUROPÄISCHE PATENTSCHRIFT**

(45) Veröffentlichungstag und Bekanntmachung des Hinweises auf die Patenterteilung:
**13.10.2010 Patentblatt 2010/41**

(51) Int Cl.:
*B60K 31/00* (2006.01)     *B60T 7/22* (2006.01)
*B60T 7/12* (2006.01)

(21) Anmeldenummer: **01927604.7**

(22) Anmeldetag: **24.03.2001**

(86) Internationale Anmeldenummer:
**PCT/DE2001/001152**

(87) Internationale Veröffentlichungsnummer:
**WO 2001/076904 (18.10.2001 Gazette 2001/42)**

(54) **VERFAHREN UND VORRICHTUNG ZUR STEUERUNG DES ABSTANDS EINES FAHRZEUGS ZU EINEM VORAUSFAHRENDEN FAHRZEUG**

METHOD AND DEVICE FOR CONTROLLING THE DISTANCE FROM A VEHICLE TO A PRECEDING VEHICLE

PROCEDE ET DISPOSITIF PERMETTANT DE REGULER LA DISTANCE SEPARANT UN VEHICULE D'UN VEHICULE LE PRECEDANT

(84) Benannte Vertragsstaaten:
**DE FR SE**

(30) Priorität: **08.04.2000 DE 10017662**

(43) Veröffentlichungstag der Anmeldung:
**15.01.2003 Patentblatt 2003/03**

(73) Patentinhaber: **ROBERT BOSCH GMBH**
**70442 Stuttgart (DE)**

(72) Erfinder:
• **WINNER, Hermann**
  **76467 Bietigheim (DE)**
• **IRION, Albrecht**
  **70563 Stuttgart (DE)**

(56) Entgegenhaltungen:
EP-A- 0 484 995     DE-A- 19 804 641
FR-A- 2 732 651     US-A- 4 621 705
US-A- 5 864 285     US-A- 6 009 368

**Beschreibung**

Die Erfindung betrifft ein Verfahren nach dem Oberbegriff des Anspruchs 1 zur Steuerung des Abstands eines Fahrzeugs zu einem vorausfahrenden Fahrzeug.

Stand der Technik

Verfahren und Vorrichtungen dieser Art sind unter dem Namen "adaptive Fahrgeschwindigkeitsregler" sowie unter dem Kürzel "ACC" (Adaptive Cruise Control) bekannt und werden beispielsweise beschrieben in dem Aufsatz "Adaptive Cruise Control - System Aspects and Development Trends" von Winner, Witte et al., veröffentlicht auf der SAE 96, Detroit, 26. bis 29. Februar 1996, paper no. 961010. Spezielle Aspekte solcher Systeme werden in DE 196 27 727, DE 196 730 245 sowie DE 196 40 694 beschrieben.

Das gattungsbildende Dokument EP-A-0 484 995 beschreibt ein Verfahren der eingangs genannten Art, bei dem in Abhängigkeit von der Differenz zwischen Ist- und Sollabstand - mit einer gewissen Hysterese - zwischen Abstandsregelung und Abstandsbegrenzung umgeschaltet wird.

Die Abstandsmessung erfolgt bei den bekannten Systemen üblicherweise mit Hilfe eines Radarsystems, das aufgrund des Dopplereffekts auch eine direkte Messung der Relativgeschwindigkeit ermöglicht, so daß das Regelsystem in der Lage ist, unverzüglich auf erfaßte Geschwindigkeitsänderungen des vorausfahrenden Fahrzeugs zu reagieren.

Der Sollabstand, der für die Regelung zugrunde gelegt wird, entspricht dem bei Kolonnenfahrten zwischen den aufeinander folgenden Fahrzeugen einzuhaltenden Sicherheitsabständen und ist so bemessen, daß es auch bei längeren Fahrzeugkolonnen und unter Berücksichtigung der Reaktionszeiten der beteiligten Fahrer nicht zu Auffahrunfällen kommt, wenn ein Fahrzeug aufgrund eines plötzlich aufgetretenen Hindernisses abrupt bremsen muß. Dieser Sicherheitsabstand ist geschwindigkeitsabhängig und wird deshalb zweckmäßigerweise indirekt über eine sogenannte Soll-Zeitlücke bestimmt, die dem zeitlichen Abstand entspricht, in dem die aufeinander folgenden Fahrzeuge denselben Ort passieren. In einer idealisierten Verfolgungsfahrt ist dann die Weg-Zeit-Kurve des verfolgenden Fahrzeugs das genaue, um die Soll-Zeitlücke versetzte Abbild der Weg-Zeit-Kurve des vorausfahrenden Fahrzeugs. Entsprechendes gilt auch für die Geschwindigkeits-Zeit-Kurve sowie für die Beschleunigungs-Zeit-Kurve, wobei die Beschleunigungen auch negative Werte haben können (die Verzögerung des Fahrzeugs ist definiert als der Betrag der negativen Beschleunigung).

In der Praxis führen unvermeidliche Regelverzögerungen und Unterschiede in den Fahrzeugeigenschaften (Beschleunigungsvermögen) dazu, daß die Weg-Zeit-Kurve des verfolgenden Fahrzeugs etwas von der entsprechenden Kurve des vorausfahrenden Fahrzeugs abweicht. Solche Abweichungen sind in gewissem Ausmaß durchaus erwünscht, weil sie dazu führen, daß Geschwindigkeitsfluktuationen eines "unruhigen" vorausfahrenden Fahrzeugs etwas geglättet werden. Dieser Glättungseffekt läßt sich auch gezielt verstärken, etwa dadurch, daß man die Beschleunigungen des vorausfahrenden Fahrzeugs mit einer Tiefpaßcharackeristik gefiltert in die Regelung einfließen läßt.

Aufgabe der Erfindung ist es, bei einer solchen Abstandsregelung den Komfort und das Sicherheitsgefühl für den Fahrer und die Fahrzeuginsassen zu verbessern.

Diese Aufgabe wird erfindungsgemäß mit den in den unabhängigen Patentansprüchen angegebenen Merkmalen gelöst.

Vorteile der Erfindung

Bei dem erfindungsgemäßen Verfahren ist die bei der Abstandsregelung zugelassene Verzögerung begrenzt, und in Situationen, in denen sich der Sollabstand mit dieser begrenzten Verzögerung nicht einhalten läßt, wird von der Abstandsregelung zu einer Abstandsbegrenzung auf einen Mindestabstand übergegangen, der kleiner ist als der Sollabstand, und nach Erreichen des Mindestabstands wird das Fahrzeug weiter verzögert, so daß der Abstand wieder auf den Sollabstand zunimmt.

Wenn sich das eigene Fahrzeug mit hoher Geschwindigkeit einem langsamer fahrenden vorausfahrenden Fahrzeug annähert, oder wenn während der Verfolgungsfahrt das vorausfahrende Fahrzeug plötzlich verzögert wird, so führt das erfindungsgemäße Verfahren dazu, daß das nachfolgende Fahrzeug vorübergehend in den Sollabstand "eintaucht" und dann zurückfällt, bis wieder der Sollabstand erreicht ist. Auf diese Weise läßt sich vermeiden, daß der Komfort und das Sicherheitsgefühl durch extreme Fahrzeugverzögerungen beeinträchtigt werden. Diese bei dem erfindungsgemäßen Verfahren angewandte Eintauchstrategie entspricht dem intuitiven Verhalten eines geübten Autofahrers. Durch die Erfindung wird somit das Verhalten des Regelsystems stärker an das natürliche Verhalten eines menschlichen Autofahrers angenähert, und es werden somit Irritationen vermieden, die sich andernfalls aus dem abweichenden Verhalten des automatischen Regelsystems ergeben könnten. Die vorübergehende Unterschreitung des Sollabstands ist sicherheitstechnisch unbedenklich, da diese nur kurzzeitig ist und angenommen werden kann, dass der Fahrer durch die Bremsung sehr aufmerksam ist. Verkehrstechnisch hat das erfindungsgemäße Verfahren den Effekt, dass Geschwindigkeitsfluktuationen oder abrupte Geschwindigkeitsänderungen weit stärker abgefedert werden, als dies mit einer reinen Abstandsregelung möglich wäre. Es ist bekannt, daß sich solche Geschwindigkeitsfluktuationen insbesondere bei hohem Verkehrsaufkommen auf einer Autobahn in einer rückschreitenden Welle aufschaukeln und schließlich zu einem Überlastungsstau führen können. Insofern leistet die Erfindung auch einen Beitrag zur Flüssigkeit des Verkehrs und damit letztlich zur Verkehrssicherheit.

Der Mindestabstand zum vorausfahrenden Fahrzeug, der auch bei einem Eintauchvorgang nicht unterschritten werden soll, läßt sich wieder zweckmäßig durch eine Zeitlücke beschreiben, die als Eintauch-Zeitlücke bezeichnet werden soll und kleiner ist als die Soll-Zeitlücke. Der Mindestabstand ist dann das Produkt aus Eintauch-Zeitlücke und Geschwindigkeit des eigenen (nachfolgenden) Fahrzeugs. Die Differenz zwischen dem Istabstand und dem Mindestabstand ist die Verzögerungsdistanz (gemessen als Relativabstand zwischen den Fahrzeugen), innerhalb derer beim Eintauchen die Relativgeschwindigkeit zwischen den Fahrzeugen auf null abgebaut werden muß. Aus dieser Verzögerungsdistanz und der bekannten augenblicklichen Relativgeschwindigkeit läßt sich mit Hilfe des Weg-Zeit-Gesetzes für eine gleichmäßig beschleunigte Bewegung ein Beschleunigungswert errechnen, der sicherstellt, daß die Relativgeschwindigkeit tatsächlich innerhalb der Verzögerungsdistanz abgebaut wird. Dies gilt allerdings nur unter der Voraussetzung, daß das vorausfahrende Fahrzeug seine Geschwindigkeit konstanz beibehält. Wenn dies nicht der Fall ist, muß zu dem errechneten Beschleunigungswert noch die - gegebenenfalls geeignet gefilterte - Beschleunigung des vorausfahrenden Fahrzeugs hinzu addiert werden. Mit der so erhaltenen Beschleunigung läßt sich der Eintauchvorgang so steuern, daß einerseits der Mindestabstand nicht unterschritten wird und andererseits die Beschleunigung des eigenen Fahrzeugs dem Betrage nach so klein wie möglich bleibt.

Im Prinzip genügt es, die Verzögerungsdistanz und die sich daraus ergebende Beschleunigung nur einmal zu Beginn des Eintauchvorgangs zu bestimmen und dann im weiteren Verlauf des Eintauchvorgangs nur die Beschleunigungen des vorausfahrenden Fahrzeugs zu berücksichtigen. Die Geschwindigkeitsänderungen des vorausfahrenden Fahrzeugs lassen sich jedoch noch sanfter abfedern, wenn die Verzögerungsdistanz und die sich daraus ergebende Beschleunigung auch während des Eintauchvorgangs fortlaufend aktualisiert werden. Um zu verhindern, daß die Verzögerungsdistanz übermäßig klein wird oder gar auf null abnimmt, was zu unrealistisch hohen Verzögerungswerten führen würde, sollte in diesem Fall jedoch die Verzögerungsdistanz auf einen positiven Mindestwert begrenzt werden. Abrupte Übergänge bei der Bestimmung der Verzögerungsdistanz lassen sich dadurch vermeiden, daß in einem Abstandsbereich unterhalb des Sollabstands zwischen der theoretischen Verzögerungsdistanz, die sich aus dem Istabstand, der aktuellen Fahrzeuggeschwindigkeit und der Soll-Zeitlücke ergibt und dem unteren Grenzwert interpoliert wird.

Wenn am Ende der Eintauchphase der Mindestabstand zum vorausfahrenden Fahrzeug erreicht ist, muß das eigene Fahrzeug weiter verzögert werden, damit sich der Abstands wieder auf den Sollabstand vergrößert. Dies läßt sich regelungstechnisch auf besonders elegante Weise dadurch erreichen, daß man bei der Berechnung der geforderten Beschleunigung aus der Verzögerungsdistanz und der Relativgeschwindigkeit nicht die tatsächliche Relativgeschwindigkeit zugrunde legt, sondern zu dieser Relativgeschwindigkeit eine geeignete Rückfallgeschwindigkeit addiert. Das System verhält sich dann so, als sei die Geschwindigkeit des vorausfahrenden Fahrzeugs um die Rückfallgeschwindigkeit kleiner als die tatsächliche Geschwindigkeit. Dies hat zur Folge, daß die Verzögerung des eigenen Fahrzeugs nicht bei der Relativgeschwindigkeit null, sondern bei einer der Rückfallgeschwindigkeit entsprechenden positiven Relativgeschwindigkeit endet, so daß das eigene Fahrzeug wieder auf den Sollabstand zurückfällt.

Bei Erreichen des Sollabstands kann dann wieder auf die normale Abstandsregelung zurückgeschaltet werden. Im Hinblick auf einen sanften Übergang zwischen den verschiedenen Regelmodi ist es jedoch vorteilhaft, aus den Beschleunigungswerten, die sich einerseits aus der Abstandsregelung und andererseits aus der Abstandsbegrenzung ergeben, durch additive Überlagerung einen Sollwert zu bilden, der dann der Motorsteuerung zugeführt wird. Im Rahmen der Abstandsregelung wird in diesem Fall der Wertebereich der zulässigen Sollbeschleunigungen so begrenzt, daß nur Sollbeschleunigungen oberhalb eines bestimmten negativen Grenzwertes ausgegeben werden, während bei der Abstandsbegrenzung der Wertebereich der Beschleunigungen durch einen oberen Grenzwert, beispielsweise null, begrenzt ist. Durch Addition dieser Sollwerte ergibt sich dann ein fließender Übergang zwischen Abstandsbegrenzung und Abstandsregelung.

Weitere Vorteile ergeben sich aus den nachfolgenden Beschreibungen von Ausführungsbeispielen bzw. aus den abhängigen Patentansprüchen.

Zeichnung

Die Erfindung wird nachstehend anhand der in der Zeichnung dargestellten Ausführungsform näher erläutert.

Fig. 1 zeigt ein Blockdiagramm einer Steuereinheit zur Steuerung der Geschwindigkeit eines Fahrzeugs.
Fig. 2 zeigt ein Weg-Zeit-Diagramm des Fahrzeugs und eines vorausfahrenden Fahrzeugs.
Fig. 3 zeigt in einem Zeitdiagramm entsprechend Figur 2 die Änderung des Abstands zwischen dem Fahrzeug und dem vorausfahrenden Fahrzeug.

Fig. 4  zeigt in einem Diagramm den Zusammenhang zwischen dem Istabstand des vorausfahrenden Fahrzeugs und ei- ner für die Abszandsbegrenzung zugrunde gelegten Verzögerungsdistanz.

Fig. 5  zeigt ein Blockdiagramm des Systems zur Abstandsre- gelung und Abstandsbegrenzung.

Beschreibung von Ausführungsbeispielen

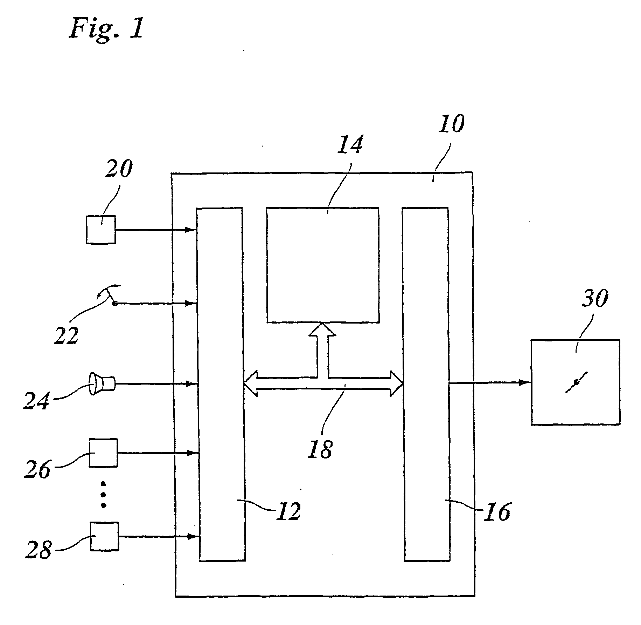

In Figur 1 ist in der Form eines Blockdiagramms eine Steuereinheit 10 für einen adaptiven Fahrgeschwindigkeitsregler eines Kraftfahrzeugs, beispielsweise eines PKW dargestellt. Die Steuereinheit 10 umfaßt eine Eingangsschaltung 12, wenigstens einen Mikrocomputer 14 und eine Ausgangsschaltung 16, die durch ein Kommunikationssystem 18 zum Datenaustausch miteinander verbunden sind.

Eine Geschwindigkeitsmeßeinrichtung 20 zur Erfassung der Fahrgeschwindigkeit des Fahrzeugs, ein vom Fahrer betätigbares Bedienelement 22, das unter anderem zur Eingabe der vom Fahrer gewünschten Sollgeschwindigkeit dient, und eine Abstandsmeßeinrichtung 24, vorzugsweise ein Radargerät, liefern Eingangssignale an die Eingangsschaltung 12. Zusätzlich nimmt die Eingangsschaltung 12 Signale von weiteren Meßeinrichtungen 26, 28 auf, die zur Erfassung weiterer Betriebsgrößen des Fahrzeugs dienen, die bei der adaptiven Fahrgeschwindigkeitsregelung Verwendung finden. Dabei handelt es sich beispielsweise um den Lenkwinkel, die Querbeschleunigung und dergleichen.

Der Mikrocomputer 14 wertet die über die Eingangsschaltung 12 eingegangenen Daten im Rahmen der adaptiven Fahrgeschwindigkeitsregelung aus und steuert über die Ausgangsschaltung 16 eine Stelleinrichtung 30, beispielsweise ein elektronisches Motorsteuergerät an, das beispielsweise durch Beeinflussung der Drosselklappenstellung, der Zündung, etc. des Fahrzeugmotors die Antriebsleistung und damit letztlich die (positive oder negative) Beschleunigung des Fahrzeugs bestimmt.

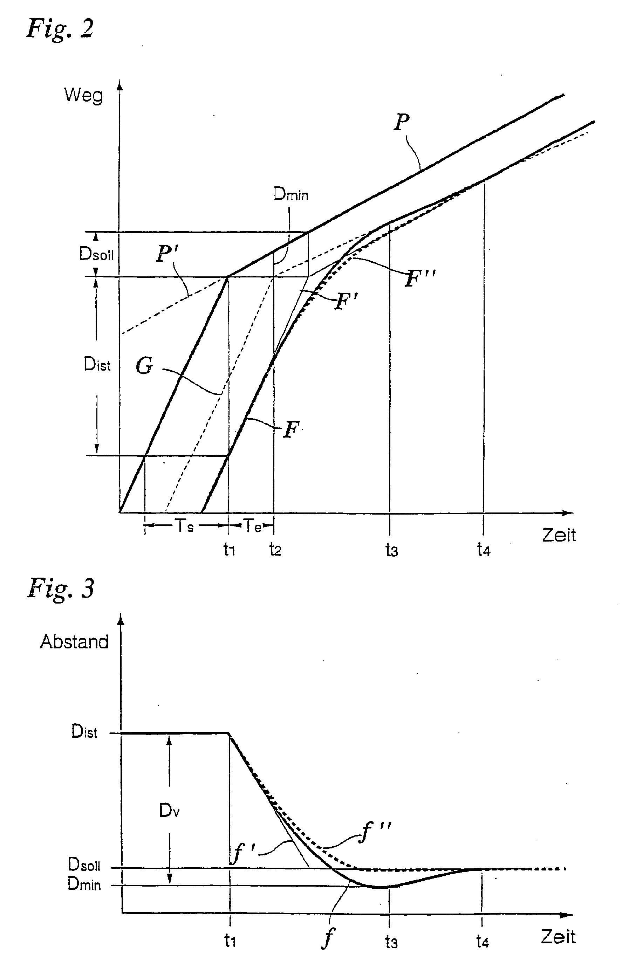

Der Mikrocomputer 14 führt periodisch ein Programm aus, mit dem die jeweils an die Stelleinrichtung 30 auszugebende Sollbeschleunigung (oder Verzögerung) berechnet wird. Wenn durch das Radargerät kein vorausfahrendes Fahrzeug geortet wird, so erfolgt eine Regelung auf die vom Fahrer eingegebene Sollgeschwindigkeit. Wird dagegen ein vorausfahrendes Fahrzeug festgestellt, so werden mit Hilfe des Radargerätes dessen Abstand Dist und Relativgeschwindigkeit Vrel gemessen, und es erfolgt eine Regelung auf einen geschwindigkeitsabhängigen Sollabstand Dsoll, der dem erforderlichen Sicherheitsabstand zwischen den Fahrzeugen entspricht. Dieser Fall ist in Figur 2 in der Form eines Weg-Zeit-Diagramms dargestellt.

Die Kurve F, die in Figur 2 in fetten, durchgezogenen Linien eingezeichnet ist, repräsentiert die Weg-Zeit-Kurve eines Fahrzeugs, das mit dem adaptiven Fahrzeuggeschwindigkeitsregler ausgestattet ist. Die Kurve P repräsentiert ein vorausfahrendes Fahrzeug. (Die Bezugszeichen F und P werden im folgenden sowohl für die Kurven als auch für die durch sie repräsentierten Fahrzeuge verwendet.) Bis zum Zeitpunkt t1 fährt das Fahrzeug P mit einer konstanten Geschwindigkeit, und die Geschwindigkeit des Fahrzeugs F wird im Rahmen der Abstandsregelung so geregelt, daß es dem Fahrzeug P mit derselben Geschwindigkeit in einem bestimmten Abstand Dist folgt. Der Abstand Dist entspricht dem zu der betreffenden Geschwindigkeit gehörenden Sollabstand und ist gleich dem Produkt aus einer Soll-Zeitlücke Ts und der Geschwindigkeit V des Fahrzeugs F.

Im gezeigten Beispiel wird vereinfachend angenommen, daß das vorausfahrende Fahrzeug P zum Zeitpunkt t1 abrupt abgebremst wird und dann mit einer kleineren Geschwindigkeit weiterfährt. Wenn der zeitliche Abstand zwischen den Fahrzeugen P und F stets genau gleich der Soll-Zeitlücke Ts wäre, so würde die zugehörige Weg-Zeit-Kurve für das Fahrzeug F durch die dünn in durchgezogenen Linien eingezeichnete Kurve F' repräsentiert, die durch Parallelverschiebung um Ts aus der Kurve P hervorgeht. Aus der verringerten Geschwindigkeit der beiden Fahrzeuge ergibt sich dann unter Zugrundelegung derselben Soll-Zeitlücke Ts ein entsprechend kleinerer Sollabstand Dsoll. Das Fahrzeug F muß deshalb innerhalb einer begrenzten Zeit seine Geschwindigkeit von der ursprünglichen Geschwindigkeit auf die neue Geschwindigkeit des vorausfahrenden Fahrzeugs verringern, damit es dem Fahrzeug P dann mit dem neuen Abstand Dsoll folgen kann. Da Dsoll kleiner ist als der bisherige Abstand Dist, braucht das Fahrzeug F jedoch nicht abrupt abzubremsen, wie durch die Kurve F' repräsentiert wird, sondern die Verzögerung kann etwas sanfter erfolgen, wie durch die gestrichelt und fett gezeichnete Kurve F" dargestellt wird. Diese Kurve stellt sicher, daß der (neue) Sollabstand Dsoll zu keinem Zeitpunkt unterschritten wird. Dafür ist jedoch immer noch eine relativ starke Verzögerung des Fahrzeugs F erforderlich, und diese Verzögerung wird von den Fahrzeuginsassen oft als beunruhigend oder zumindest als Komfortbeeinträchtigung empfunden. Bei dem erfindungsgemäßen Verfahren wird deshalb das Fahrzeug nur schwächer verzögert, wie durch die Kurve F dargestellt wird. Dabei wird bewußt in Kauf genommen, daß der Abstand zwischen den Fahrzeugen F und P vorübergehend unter den Sollabstand Dsoll abnimmt. Das heißt, das nachfolgende Fahrzeug F taucht vorübergehend in den Sollabstand des vorausfahrenden Fahrzeugs P ein und läßt sich erst dann allmählich wieder auf den Sollabstand Dsoll zurückfallen. Natürlich muß dabei die Eintauchtiefe so begrenzt werden, daß zwischen den Fahrzeugen F und P stets ein sicherer Mindestabstand Dmin eingehalten wird. Dieser Mindestabstand Dmin ist das Produkt aus der Fahrgeschwindigkeit V des Fahrzeugs F und einer Eintauchzeitlücke Te, die kleiner ist als die Soll-Zeitlücke Ts.

Die Kurven G in Figur 2 repräsentiert ein fiktives Fahrzeug, das dem Fahrzeug P bis zum Zeitpunkt t2 mit einer zeitlichen Verzögerung folgt, die der Eintauchzeitlücke Te entspricht. Vom Zeitpunkt t2 an ist die Kurve G jedoch flacher als die Kurven P und F'. Dies bedeutet, daß die Geschwindigkeit des fiktiven Fahrzeugs G vom Zeitpunkt t2 an absolut kleiner ist als die Geschwindigkeit des Fahrzeugs P, so daß sich der räumliche und zeitliche Abstand bis zur Zeit t4 wieder auf den Sollabstand Dsoll bzw. die Soll-Zeitlücke Ts vergrößert. Die Geschwindigkeit des Fahrzeugs F wird nun im Rahmen der Eintauchstrategie so geregelt, daß die zugehörige Weg-Zeit-Kurve die Kurve G berührt aber nicht schneidet. Zum Zeitpunkt t3 bildet die Kurve G eine Tangente an die Kurve F. Von diesem Zeitpunkt an braucht daher das Fahrzeug F nicht weiter verzögert zu werden, sondern es kann mit im wesentlichen konstanter Geschwindigkeit weiterfahren, bis zum Zeitpunkt t4 der Sollabstand Dsoll wieder hergestellt ist und die normale Abstandsregelung wieder aufgenommen werden kann.

In Figur 3 ist derselbe Anlauf wie in Figur 2 in der Form eines Abstands-Zeit-Diagramms dargestellt. Die Kurve f gibt den Abstand zwischen den Fahrzeugen P und F an. Die Kurve f' illustriert eine Abstandsänderung, die der Kurve F' in Figur 2 entspricht, und die Kurve f" repräsentiert eine Abstandsänderung entsprechend der Kurve F" in Figur 2. Die Kurve F" ist ein Ast einer Parabel, deren unterer Scheitelpunkt bei Dsoll liegt. Der Abschnitt der Kurve f zwischen t1 und t3 ist ein Teil einer Parabel, deren unterer Scheitel ungefähr bei dem Mindestabstand Dmin liegt und die zum Zeitpunkt t3 bereits wieder eine geringe positive Steigung hat, die die Zunahme des Fahrzeugabstands entsprechend der Rückfallgeschwindigkeit angibt. Der Fahrzeugabstand zum Zeitpunkt t3 stimmt streng genommen nicht genau mit dem Mindestabstand Dmin überein, doch ist dieser Unterschied in der Praxis nicht bedeutsam.

Die Verzögerungsdistanz Dv, innerhalb derer die Geschwindigkeit des Fahrzeug F vom. Anfangswert zur Zeit t1 auf die Zieigeschwindigkeit (Geschwindigkeit des vorausfahrenden Fahrzeugs P minus Rückfallgeschwindigkeit) zur Zeit t3 abnimmt, entspricht in Figur 3 annähernd der Differenz zwischen Dist und Dmin und ist damit deutlich größer als die Differenz zwischen Dist und Dsoll. Die Differenz zwischen Dsoll und Dmin entspricht der Eintauchtiefe, um die das Fahrzeug in den Sollabstand eintaucht.

Die Beschleunigung a0 des Fahrzeugs, die der Kurve F in Figur 2 entspricht, ist von der Verzögerungsdistanz Dv, von der Relativgeschwindigkeit Vrel zwischen den beiden Fahrzeugen und von der gewünschten Rückfallgeschwindigkeit Vrück abhängig. Die erforderliche Geschwindigkeitsänderung dV ist gleich Vrel - Vrück, Dabei sind dV und Vrel zumindest am Anfang negativ, während für Vrück stets ein positiver wert gewählt wird. Es gilt dann:

$$a0 \ = \ \mathrm{sign}(dV) * dV^2 / (2 * Dv). \qquad\qquad (1)$$

Wenn das Fahrzeug F zwischen t1 und t3 konstant diese Beschleunigung hat, so hat der Abstand zum vorausfahrenden Fahrzeug P den durch die Kurve f in Figur 3 angegebenen Verlauf, vorausgesetzt, daß sich die Geschwindigkeit des vorausfahrenden Fahrzeugs P nicht ändert. Erfährt das vorausfahrende Fahrzeug P innerhalb dieser Zeit eine Beschleunigung ap, so ist die Beschleunigung des Fahrzeugs F wie folgt zu korrigieren:

$$ac = a0 \ + \ ap. \qquad\qquad (2)$$

Aus Gleichung (1) geht hervor, daß Dv nicht null werden darf, da sonst bei der Berechnung der Beschleunigung eine Division durch null stattfindet. Aus diesem Grund wird Dv nicht immer nach der Beziehung

$$Dv \ = \ Dist - Dmin \ = \ Dist \ - \ V \ Te \qquad\qquad (3)$$

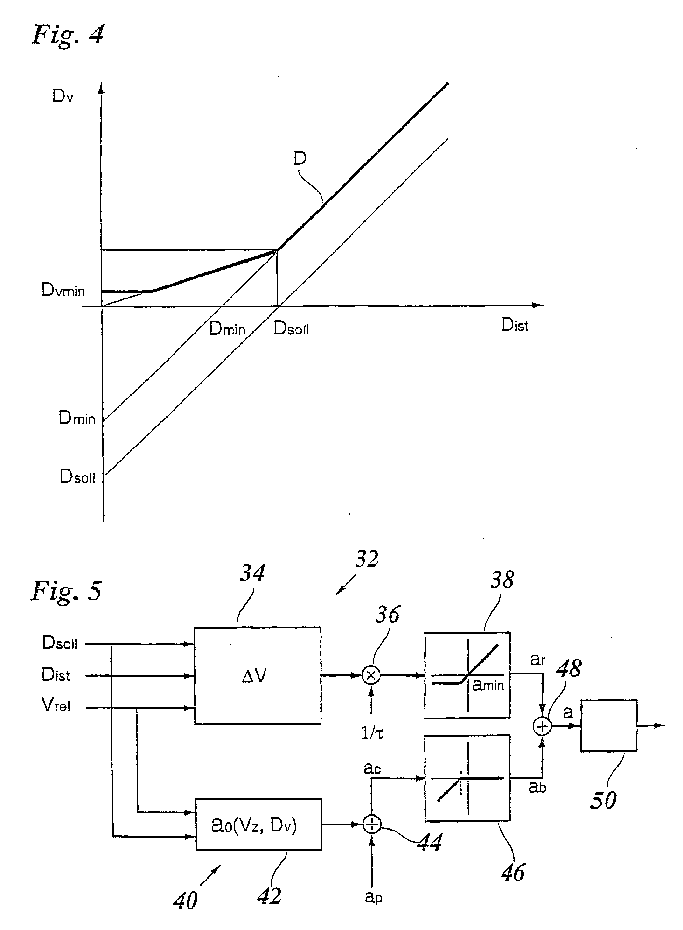

berechnet, sondern nach der Beziehung, die durch die Kurve D in Figur 4 repräsentiert wird. Die Beziehung (3) gilt demnach nur für den Fall, daß Dist größer oder gleich Dsoll ist. Dv ist auf jeden Fall größer als ein Minimalwert Dvmin (beispielsweise 2 Meter). Wenn Dist kleiner ist als Dsoll, nimmt Dv stetig auf den Minimalwert Dvmin ab. Dv berechnet sich allgemein nach der Formel:

$$Dv \ = \ \mathrm{MAX} \ (Dvmin, \ Dist(Dsoll-Dmin)/Dsoll, \ Dist-Dmin) \quad (4)$$

Figur 5 zeigt in einem Blockdiagramm die wesentlichen Funktionsteile eines Abstandsreglers und eines Abstandsbegrenzers, die durch geeignete, in dem Mikrocomputer 14 ablaufende Programme implementiert sind.

Ein Abstandsreglerteil 32, der für die normale Abstandsregelung bei mäßigen Geschwindigkeitsänderungen des vorausfahrenden Fahrzeugs zuständig ist, umfaßt ein Kennfeld 34, ein Multiplikationsglied 36 und einen Begrenzerteil 38. Das Kennfeld 34 nimmt als Eingangssignale den Sollabstand Dsoll, den gemessenen Fahrzeugabstand Dist und die gemessene Relativgeschwindigkeit Vrel auf und ermittelt aus diesen Eingangsgrößen eine Soll-Geschwindigkeitsänderung DV. Durch das Multiplikationsglied 36 wird DV mit einer Regelverstärkung 1/t, dem Kehrwert einer Zeitkonstanten t, multipliziert, so daß man als Ergebnis einen Beschleunigungswert erhält. Dieser Beschleunigungswert wird im Begrenzerteil 38 auf Werte oberhalb einer bestimmten (negativen) Grenzbeschleunigung amin begrenzt. Als Ausgangssignal liefert der Begrenzerteil 38 einen Beschleunigungs-Sollwert ar für die Abstandsregelung.

Aufgrund der Wirkung des Begrenzerteils 38 sind im Rahmen dieser Abstandsregelung keine Fahrzeugverzögerungen möglich, die größer sind als der Betrag von amin. Bei einer abrupten Änderung der Geschwindigkeit des vorausfahrenden Fahrzeugs, wie in dem anhand von Figur 2 diskutierten Beispielfall, kann deshalb der Reglerteil 32 den Sollabstand Dsoll nicht einhalten. In diesem Fall erfolgt eine Abstandsbegrenzung durch einen Abstandsbegrenzerteil 40. Dieser Abstandsbegrenzerteil 40 umfaßt ein Kennfeld oder ein Berechnungsmodul 42, ein Additionsglied 44 und einen weiteren Begrenzerteil 46. Das Rechenmodul 42 berechnet aus den gemessenen Daten zunächst die (im allgemeinen negative) Geschwindigkeitsänderung dV (=Vrel-Vrück) und anhand der in Figur 4 illustrierten Beziehung die Verzögerungsdistanz Dv und berechnet dann daraus gemäß Gleichung (1) die unkorrigierte Beschleunigung a0. Im Additionsglied 44 wird dann die gemessene und gegebenenfalls geeignet gefilterte Eigenbeschleunigung ap des vorausfahrenden Fahrzeugs hinzu addiert, so daß dem Begrenzerteil 46 die korrigierte Beschleunigung ac zugeführt wird. Im Begrenzerteil 46 wird der korrigierte Beschleunigungswert ac nach oben durch amin begrenzt und zugleich um -amin erhöht, so daß der erhaltene Beschleunigungs-Sollwert ab für die Abstandsbegrenzung nur negative Werte annehmen kann. Die vom Abstandsreglerteil 32 und vom Absiandsbegrenzerteil 40 erhaltenen Beschleunigungs-Sollwerte ar und ab werden dann in einem Additionsglied 48 addiert, und die als Sollwert a erhaltene Summe wird schließlich noch einem Ruckbegrenzer 50 zugeführt, der zur Verbesserung des Komforts abrupte Änderungen der Beschleunigung dämpft.

In dem in Figuren 2 und 3 illustrierten Beispielfall ist bis zum Zeitpunkt t1 im wesentlichen der Abstandsreglerteil 32 aktiv, während der Abstandsbecrenzerteil 40 allenfalls einen vernachlässigbaren Beitrag zur letztlich ausgegebenen Sollbeschleunigung a liefert, da die Relativgeschwindigkeit nahe bei null liegt und somit auch die Geschwindigkeitsänderung dV sehr klein ist. Da die Rückiallgeschwindigkeit Vrück nur benötigt wird, um nach einem Eintauchvorgang wieder den Sollabstand herzustellen, kann dV auch immer dann gleich Vrel gesetzt werden, wenn Dist größer als Dsoll ist.

Wenn zur Zeit t1 das vorausfahrende Fahrzeug abgebremst wird, reicht die durch den Reglerteil darstellbare Sollbeschleunigung bzw. Verzögerung ar nicht mehr aus, den Sollabstand einzuhalten. Die Sollbescnleunigung wird dann maßgeblich durch den Ausgangswert ab des Abstandsbegrenzerteils bestimmt, so daß das Fahrzeug F in der in den Figuren 2 und 3 gezeigten Weise in den Sollabstand eintaucht. Dabei werden die Werte von dV und Dv fortlaufend angepaßt. Da dann der Istabstand Dist kleiner ist als Dsoll, wird für die Bestimmung von Dv der flachere Teil der Kurve D in Figur 4 wirksam. Die Geschwindigkeit des Fahrzeug nähert sich allmählich der Zielgeschwindigkeit, mit der Folge, daß die vom Abstandsbegrenzerteil 40 ausgegeben Sollbescleunigung ab dem Betrage nach wieder gegen null geht, bis schließlich wieder der Abstandsreglerteil 32 dominiert und etwa ab der Zeit t4 die Abstandsregelung fortgesetzt wird.

In Figur 2 wurde als Beispiel der Fall betrachtet, daß die Geschwindigkeit des vorausfahrenden Fahrzeugs P zu einem bestimmten Zeitpunkt t1 abrupt abnimmt. Dieselbe Eintauchstrategie wird jedoch auch in dem Fall verfolgt, in dem das vorausfahrende Fahrzeug P von Anfang an eine relativ niedrige konstante Geschwindigkeit hat, wie durch die strichpunktiert eingezeichnete Kurve P' in Figur 2 symbolisiert wird, und das nachfolgende Fahrzeug F mit höherer Geschwindigkeit auffährt, bis zum Zeitpunkt t1 das vorausfahrende Fahrzeug vom Radarsystem geortet wird.

Während im beschriebenen Ausführungsbeispiel für die Bestimmung der Eintauchtiefe mit einer konstanten Eintauchzeitlükke gearbeitet wird, ist es in anderen Ausführungsformen auch möglich, andere charakteristische Größen als Maß für die Eintauchtiefe zu verwenden. Beispielsweise könnte ein konstanter Eintauchabstand Dmin vorgegeben werden, oder der Eintauchabstand könnte proportional zum Sollabstand gewählt werden. Ebenso ist es denkbar, die Rückfallgeschwindigkeit Vrück situationsabhängig zu variieren.

**Patentansprüche**

1. Verfahren zur Steuerung des Abstands eines Fahrzeugs (F) zu einem vorausfahrenden Fahrzeug (P), bei dem der Abstand Dist und die Relativgeschwindigkeit des vorausfahrenden Fahrzeugs (P) gemessen werden und in einem Abstandsregelmodus der Abstand durch Beschleunigen oder Verzögern des Fahrzeugs (F) auf einen vorgegebenen Sollabstand Dsoll geregelt wird, wobei eine Beschleunigung a0 nach der folgenden Gleichung (1) berechnet wird:

$$a0 = \text{sign}(dV) * dV^2 / (2 * Dv) \qquad (1)$$

wobei dV eine erforderliche Geschwindigkeitsänderung und Dv eine Verzögerungsdistanz ist,
**dadurch gekennzeichnet, dass** die bei der Abstandsregelung zugelassene Verzögerung (-ar) begrenzt ist, in Situationen, in denen sich der Sollabstand Dsoll mit dieser begrenzten Verzögerung nicht einhalten lässt, zu einer Abstandsbegrenzung auf einen Mindestabstand Dmin, der kleiner als der Sollabstand ist, übergegangen wird, wobei die Verzögerungsdistanz Dv in Gleichung (1) gleich der Differenz zwischen dem aktuellen Abstand Dist und dem Mindestabstand Dmin ist, solange Dist grösser als der Sollabstand Dsoll ist, und wobei die Verzögerungsdistanz Dv stets grösser als ein positiver Mindestwert Dvmin ist, und das Fahrzeug (F) nach Erreichen des Mindestabstands weiter verzögert wird, so dass der Abstand wieder auf den Sollabstand zunimmt.

2. Verfahren nach Anspruch 1, **dadurch gekennzeichnet, dass** bei der Abstandsbegrenzung zu der Beschleunigung aO die Eigenbeschleunigung ap des vorausfahrenden Fahrzeugs (P) addiert wird.

3. Verfahren nach Anspruch 2, **dadurch gekennzeichnet, dass** die Verzögerungsdistanz Dv fortlaufend in Abhängigkeit vom Abstand Dist und von der Geschwindigkeit des Fahrzeugs (F) variiert wird.

4. Verfahren nach Anspruch 3, **dadurch gekennzeichnet, dass** die Verzögerungsdistanz Dv nach folgender Formel berechnet wird :

$$Dv = MAX \ (Dvmin, \ Dist(Dsoll-Dmin)/Dsoll, \ Dist-Dmin).$$

5. Verfahren nach einem der Ansprüche 2 bis 4, **dadurch gekennzeichnet, dass** jedenfalls, solange der aktuelle Abstand Dist kleiner ist als der Sollabstand Dsoll, die Geschwindigkeitsänderung dV bestimmt wird, indem von der Relativeschwindigkeit Vrel eine vorgegebenepositive Rückfallgeschwindigkeit Vrück subtrahiert wird.

6. Verfahren nach einem der vorstehenden Ansprüche, **dadurch gekennzeichnet, dass** die Sollbeschleunigung a des Fahrzeugs bestimmt wird, indem eine im Rahmen der Abstandsregelung emittelte Sollbeschleunigung ar so mit einer im Rahmen der Abstandsbegrenzung ermittelten Sollbeschleunigung ab verknüpft wird, das oberhalb einer bestimmten negativen Grenzbeschleunigung amin die im Rahmen der Abstandsregelung ermittelte Sollbeschleunigung ar und unterhalb dieser Grenzbeschleunigung die im Rahmen der Abstandsbegrenzung ermittelte Sollbeschleunigung ab dominiert.

7. Vorrichtung zur Steuerung des Abstands eines Fahrzeugs (F) zu einem vorausfahrenden Fahrzeug (P), mit einer Einrichtung (24) zur Messung des Abstands und der Relativgeschwindigkeit des vorausfahrenden Fahrzeugs und einer Datenverarbeitungseinrichtung (14) mit einem Abstandsreglerteil (32), der eine Sollbeschleunigung (ar) zur Regelung des Abstands zum vorausfahrenden Fahrzeug auf einen vorgegebenen Sollabstand (Dsoll) bestimmt, und einem Abstandsbegrenzerteil (40), der bei Unterschreitung des Sollabstands (Dsoll) wirksam wird, **dadurch gekennzeichnet, dass** in den Abstandsregler- und Abstandsbegrenzerteilen (32, 40) ein Verfahren nach einem der vorstehenden Ansprüche implementiert ist.

**Claims**

1. Method for controlling the distance of a vehicle (F) from a preceding vehicle (P), in which the distance Dact and the relative speed of the preceding vehicle (P) are measured and the distance is adjusted to a predefined setpoint distance Dsetp by accelerating or decelerating the vehicle (F) in a distance-adjusting mode, wherein acceleration a0 is calculated according to the following equation (1):

$$a0 \ = \ sign(dV) \texttt{*} dV^2 / (2 \texttt{*} Dv) \hspace{3cm} (1)$$

wherein dV is a necessary change in speed and Dv is a deceleration distance,
**characterized in that** the deceleration (-ar) which is permitted during the distance-adjustment process is limited, in situations in which the setpoint distance Dsetp cannot be complied with by means of this limited deceleration, the system changes to a process of limiting the distance to a minimum distance Dmin which is less than the setpoint distance, wherein the deceleration distance Dv in equation (1) is equal to the difference between the current distance Dact and the minimum distance Dmin as long as Dact is greater than the setpoint distance Dsetp, and wherein the deceleration distance Dv is always greater than a positive minimum value Dvmin,
and the vehicle (F) is decelerated further after the minimum distance has been reached so that the distance increases again to the setpoint distance.

2. Method according to Claim 1, **characterized in that** in the distance-limiting process, the actual acceleration ap of the vehicle (P) travelling ahead is added to the acceleration aO.

3. Method according to Claim 2, **characterized in that** the deceleration distance Dv is continuously varied as a function of the distance Dact and of the speed of the vehicle (F).

4. Method according to Claim 3, **characterized in that** the deceleration distance Dv is calculated according to the following formula:

$$Dv = MAX\ (Dvmin,\ Dact(Dsetp-Dmin)/Dsetp,\ Dact-Dmin).$$

5. Method according to one of Claims 2 to 4, **characterized in that**, at any rate, as long as the current distance Dact is shorter than the setpoint distance Dsetp, the change Dv in speed is determined by subtracting a predefined, positive fallback speed Vback from the relative speed.

6. Method according to one of the preceding claims, **characterized in that** the setpoint acceleration a of the vehicle is determined by logically combining a setpoint acceleration ar which is acquired within the scope of the distance-adjustment process, with a setpoint acceleration ab which is acquired within the scope of the distance-limiting process, in such a way that the setpoint acceleration ar which is acquired within the scope of the distance-adjustment process is dominant above a certain negative limiting acceleration, and the setpoint acceleration ab which is acquired within the scope of the distance-limiting process is dominant below this limiting acceleration.

7. Device for controlling the distance of a vehicle (F) from a preceding vehicle (P), with an apparatus (24) for measuring the distance and the relative speed of the preceding vehicle (P) and a data processing device (14) with a distance-adjuster part (32) which determines a setpoint acceleration (ar) for adjusting the distance from the preceding vehicle (P) to a predefined setpoint distance (Dsetp), and a distance-limiter part (40) which becomes active when the setpoint distance (Dsetp) is undershot, **characterized in that** a method according to one of the preceding claims is implemented in the distance-adjuster part (32) and distance-limiter part (40).

**Revendications**

1. Procédé de contrôle de la distance entre un véhicule (F) et un véhicule (P) qui se déplace en avant de lui, dans lequel la distance Dist et la vitesse relative du véhicule (P) qui se déplace en avant sont mesurées et la distance est régulée à une distance de consigne prédéterminée Dsoll par accélération ou ralentissement du véhicule (F), l'accélération a0 étant calculée à partir de l'équation (1) ci-dessous :

$$a0 = sign(dV)*dV^2/(2*Dv) \qquad (1)$$

dans laquelle dV représente la modification nécessaire de la vitesse et Dv la distance de ralentissement,
**caractérisé en ce que**
le ralentissement (-ar) admis par la régulation de distance est limité,
**en ce que** dans des situations dans lesquelles la distance de consigne Dsoll ne peut être conservée avec ce ralentissement limité, on passe à une limitation de la distance à une distance minimale Dmin inférieure à la distance de consigne,
**en ce que** la distance de ralentissement Dv de l'équation (1) est la différence entre la distance effective Dist et la distance minimale Dmin pour autant que Dist soit supérieure à la distance de consigne Dsoll,
**en ce que** la distance de ralentissement Dv est toujours supérieure à une valeur minimale positive Dvmin et

**en ce qu'**après avoir atteint la distance minimale, le véhicule (F) continue à être ralenti de telle sorte que la distance revienne à la distance de consigne.

2. Procédé selon la revendication 1, **caractérisé en ce que** lors de la limitation de distance, l'accélération propre ap du véhicule (P) se déplaçant en avant est ajoutée à l'accélération aO.

3. Procédé selon la revendication 2, **caractérisé en ce que** la distance de ralentissement Dv est modifiée en permanence en fonction de la distance Dist et de la vitesse du véhicule (F).

4. Procédé selon la revendication 3, **caractérisé en ce que** la distance de ralentissement Dv est calculée à partir de la formule suivante :

$$Dv = MAX(Dvmin, \ Dist(Dsoll-Dmin)/Dsoll, \ Dist-Dmin).$$

5. Procédé selon l'une des revendications 2 à 4, **caractérisé en ce qu'**en tout cas tant que la distance effective Dist est inférieure à la distance de consigne Dsoll, la modification de vitesse dV est déterminée en soustrayant une vitesse positive prédéterminée de recul Vrück de la vitesse relative Vrel.

6. Procédé selon l'une des revendications précédentes, **caractérisé en ce que** l'accélération de consigne a du véhicule est déterminée en associant une accélération de consigne ar déterminée dans le cadre de la régulation de distance à une accélération de consigne ab déterminée dans le cadre de la limitation de distance, **en ce qu'**au-dessus d'une accélération limite négative définie amin, l'accélération de consigne ar déterminée dans le cadre de la régulation de distance domine et **en ce qu'**en dessous de cette accélération limite, l'accélération de consigne ab déterminée dans le cadre de la limitation de distance domine.

7. Dispositif de contrôle de la distance d'un véhicule (F) par rapport à un véhicule (P) qui se déplace en avant de lui, doté d'un dispositif (24) de mesure de la distance et de la vitesse relative du véhicule qui se déplace en avant,
   d'un dispositif (14) de traitement de données doté d'une partie (32) de régulation de distance qui détermine une accélération de consigne (ar) pour régler à une distance de consigne prédéterminée (Dsoll) la distance par rapport au véhicule qui se déplace en avant et
   d'une partie (40) de limitation de distance qui devient active lorsque la distance de consigne (Dsoll) n'est pas atteinte,
   **caractérisé en ce que**
   un procédé selon l'une des revendications précédentes est mis en oeuvre dans la partie de régulation de distance et dans la partie de limitation de distance (32, 40).

Fig. 1

**Fig. 2**

**Fig. 3**

*Fig. 4*

*Fig. 5*

IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19627727
- DE 196730245
- DE 19640694
- EP 0484995 A